# EUROPEAN PATENT SPECIFICATION

(11) **EP 1 085 514 B1**
(45) Date of publication and mention of the grant of the patent: **08.09.2004**
(21) Application number: 99830571.8
(22) Date of filing: 10.09.1999
(51) Int. Cl.: G11B 23/00, G06K 19/04

(54) **Data storage unit**
Datenspeichervorrichtung
Dispositif de stockage de données

(43) Date of publication of application: 21.03.2001
(73) Proprietor: International Consulting S.r.l., 20059 Vimercate (MI) (IT)
(72) Inventor: Perego, Luciano, 20050 Mezzago, MI (IT)
(74) Representative: Tansini, Elio Fabrizio

(56) References cited:
- EP-A- 0 394 686
- EP-A- 0 484 788
- EP-A- 0 723 266
- DE-A- 19 541 306
- DE-U- 29 708 978
- DE-U- 29 709 648
- DE-U- 29 903 974
- FR-A- 2 641 112
- GB-A- 2 059 666
- GB-A- 2 239 974
- NL-A- 9 000 256
- US-A- 4 903 256

## Description

The present invention relates to a data storage unit, of the type comprising the features set forth in the preamble of claim 1.

In particular, the storage unit in reference is conceived for being associated with a card of standardized rectangular shape, of the type usually used as credit card or telephone card for example.

It is known that cards of the above mentioned type are essentially defined by a plate-like or flat support of plastic material with which a digital memory unit is associated.

In a first known type of card, the digital memory essentially consists of a magnetic band extending over one of the two opposite faces of the flat body, parallelly of one of the major sides of said body.

In a second known type of card commercially identified as "Smart Card", the digital memory is essentially made up of a microchip incorporated into the thickness of the flat body and having contact elements appearing on one of the faces of the flat body itself.

Also proposed in recent times have been cards of standardized rectangular shape in which the digital memory is of the optical type, i.e. of the type commonly utilized in manufacturing compact discs.

Embodiments of these cards are described in Patent Applications JP 4040586 and WO 99/00765.

Modalities for accomplishing known cards having an optical memory and the consequent structure of same do not have important differences as compared with the features usually encountered with reference to compact discs. In conclusion, a known card with an optical memory essentially consists of a compact disc of rectangular conformation, in which the area intended for data storage is delimited by an annulus substantially tangent to the major sides of the card and concentric with a through opening disposed at a centered position on the card itself.

Appropriate centering elements, embodied for example by ridges in the form of an arc of a circle or projections of different shape are arranged on a reading face of the card, intended for resting on an extractable tray being part of an usual reading unit for compact discs, in order to enable correct positioning of the card itself on said tray.

A data storage unit adapted to be associated with a respective support card is also known by documents NL 9 000 256, GB 2 059 666, US 4 903 256, EP 0 723 266, DE 299 03 974, and DE 195 41 306. In particular, document NL 9 000 256 discloses according to the preamble of claim 1, a card presenting a recess adapted to be associated with an optical data storage unit. The recess presents a shoulder to engage and disengage the outer circumferential edge of the storage unit.

After the above statements, the Applicant has wished to analyse the possibility of providing a card with greatly improved versatility of use and memory capabilities as compared with the cards of the known art. In particular, the Applicant has aimed at enabling coexistence of several memory units even of different typologies on one and the same card, as well as the opportunity of omitting, removing and/or replacing at least one of the memory units to be combined with the card itself.

In accordance with the present invention, the foregoing and further aims that will become more apparent in the course of the present description are attained by a data storage unit comprising the features set forth in claim 1.

Further features and advantages will be best understood from the detailed description of a preferred but non-exclusive embodiment of a memory unit in accordance with the present invention, in combination with a support card with which the memory unit in reference will be associated. This description will be taken hereinafter with reference to the accompanying drawings, given by way of non-limiting example, in which:

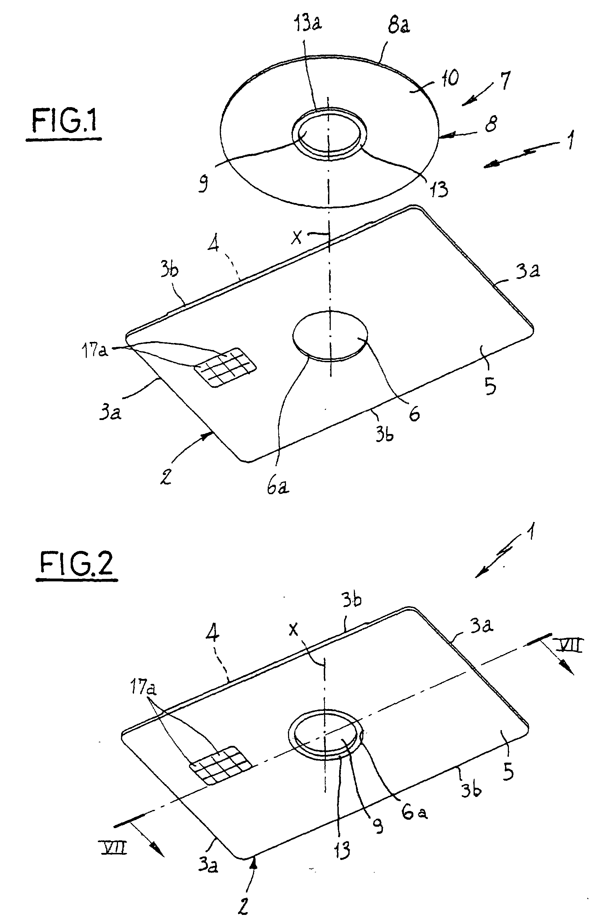

- Fig. 1 is an exploded perspective bottom view of a memory unit in accordance with the invention, associated with a respective support card;
- Fig. 2 shows the memory unit mounted on the card of Fig. 1;
- Fig. 3 is a view to an enlarged scale of a flat support being part of the card to be used in combination with the subject memory unit, seen from the opposite side relative to Fig. 1;
- Fig. 4 is an exploded perspective top view showing a second embodiment of the invention;
- Fig. 5 shows the memory unit and card in Fig. 4 in an assembled condition;

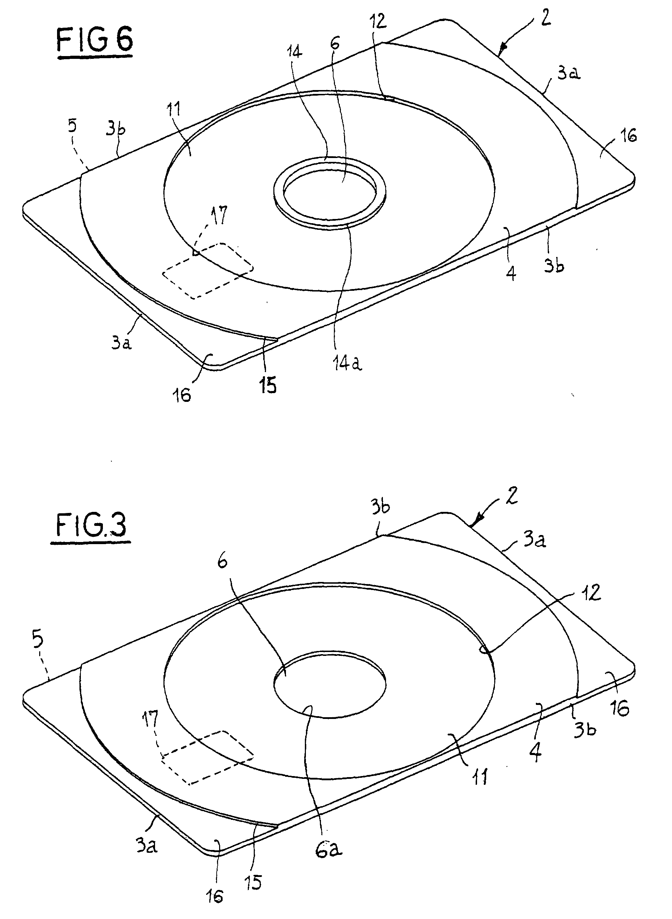

- Fig. 6 shows a flat support being part of the card shown in Figs. 4 and 5, to an enlarged scale;
- Fig. 7 is a section taken along line VII-VII in Fig. 2, showing coupling between the subject memory unit and the flat support, in accordance with a preferential embodiment of the invention;
- Fig. 8 shows an alternative embodiment in respect of Fig. 7;
- Fig. 9 is a section taken along line IX-IX in Fig. 5, showing a different embodiment for achieving coupling between the first memory unit and the flat support;
- Fig. 10 shows an alternative embodiment in respect of Fig. 8.

With reference to the drawings, a support card for a data storage unit to be used in combination with a memory unit accomplished in accordance with the present invention has been generally identified by reference numeral 1.

Card 1 essentially comprises a flat support 2, preferably made of plastic material, having a perimetral edge of a substantially rectangular profile defined by minor sides 3a and major sides 3b preferably of standardized sizes, corresponding to those of a conventional credit card.

The perimetral edge 3a, 3b delimits, on the flat support 2, respectively opposite first 4 and second 5 faces having a through opening 6 preferably disposed at a centered position in the flat support 2. In more detail, the through opening 6 has a geometric axis "X" intersecting the crossing point between the diagonals in the rectangular configuration of the flat support 2.

The first face 4 is advantageously intended for carrying a first data storage unit 7, hereinafter referred to as first storage unit, circumscribing the through opening 6.

The first storage unit 7 is preferably of a disc-shaped type, i.e. it comprises a plate-like body 8 having a centering through hole 9 and at least one area 10 for data storage, preferably of the optical type, such disposed as to form an annulus extending concentric with the centering through hole 9 and substantially tangent to the major sides 3b of the flat support 2.

In particular, it is preferably provided for the first storage unit 7, or at least the plate-like body 8 thereof, to be essentially defined by a DVD (digital versatile disc) disc-half the outer diameter of which substantially corresponds to the size of the minor sides 3a of the flat support 2. To the ends of the present description, by "disc-half" it is intended one of the two disc-shaped elements that are usually coupled in mutual superposition relationship when DVDs following conventional techniques are made. In this connection please see document EP 866450 for further explanations and information on how DVDs are made.

The plate-like body 8 preferably has a circular conformation, delimited by an outer circumferential edge 8a, but the plate-like body may also have a different conformation, a quadrangular conformation for example, provided it is contained within the extension of the perimetral edge 3a, 3b of the flat support 2.

Disposed on the first face 4 of the flat support 2, at the through opening 6, is means for engagement of the first storage unit 7, preferably comprising a surface recess 11 formed on the first face itself. The surface recess 11 is able to house the first storage unit 7 when the latter, through a locating surface 7a thereof, is brought in abutment on the surface recess itself.

Preferably, the shape of the surface recess 11 matches that of the first storage unit 7 and its depth corresponds to the thickness of said storage unit. In this way the first storage unit 7, when housed in the surface recess 11, has a reading surface 7b disposed flush with the first face 4 of the flat support 2.

In particular, in the embodiment shown, the surface recess 11 has a circular conformation and is delimited by a circumferential ridge 12 substantially tangent to the major sides 3b of the flat support 2.

Advantageously, engagement of the first storage unit 7 with the flat support 2 further involves the aid of mechanical-interfacing means comprising a fitting element for example for engagement between the storage unit itself and the support card 1, preferably in a removable manner.

This mechanical-interfacing means preferably comprises a collar 13 axially projecting from the locating surface 7a at the centering through hole 9 having an inner diameter corresponding to that of the centering hole usually provided in a conventional compact disc or DVD. Collar 13 defines a shoulder 13a turned away from the geometric axis of the through hole. Shoulder 13a is able to cooperate with an inner circumferential edge 6a of the through opening 6 to accomplish a tight mechanical-interference fit with said opening.

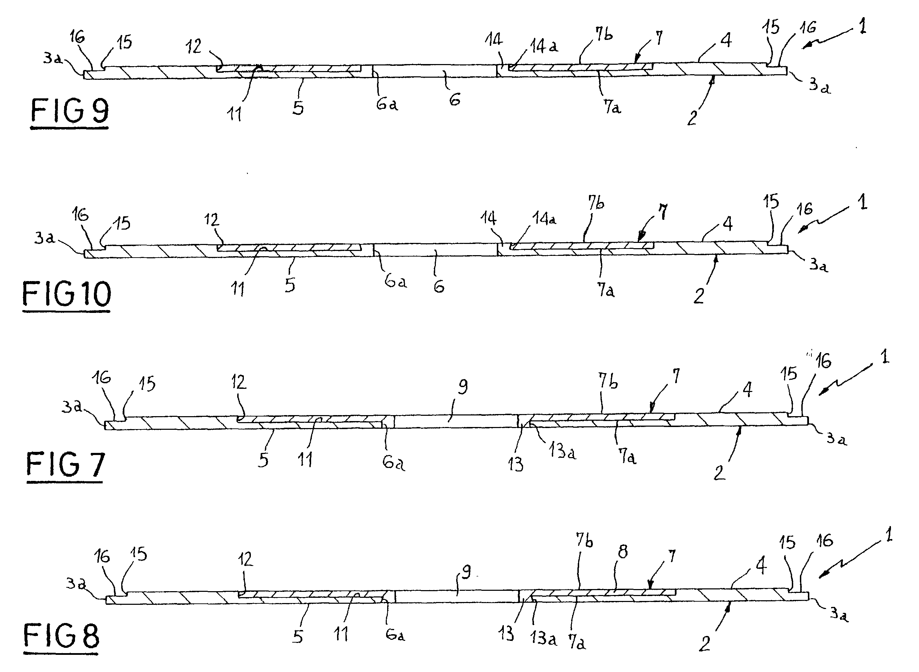

In a preferential embodiment shown in Fig. 7, shoulder 13a of collar 13 has a substantially cylindrical conformation in the same manner as the inner circumferential edge 6a of the through opening 6. The outer diameter of collar 13 is slightly greater than the inner diameter of opening 6, so as to carry out a tight interference fit of the collar into the opening.

In accordance with an alternative embodiment shown in Fig. 8, it may be advantageously provided that shoulder 13a defined by collar 13 and/or the inner circumferential edge 6a of the through opening 6 should be of truncated conical form. In this manner shoulder 13a defines an undercut turned towards the flat body 8, whereas the inner circumferential edge 6a defines an undercut turned towards the second face 5 of the flat support 2. Due to the presence of these undercuts a mechanical-interference snap fitting of collar 13 in opening 6 occurs.

To make snap-fitting easier, radial cuts may be advantageously arranged at collar 13 and/or opening 6, which cuts divide the collar itself and/or the inner circumferential edge 6a into a plurality of elastically-deformable portions in the form of an arc of a circle.

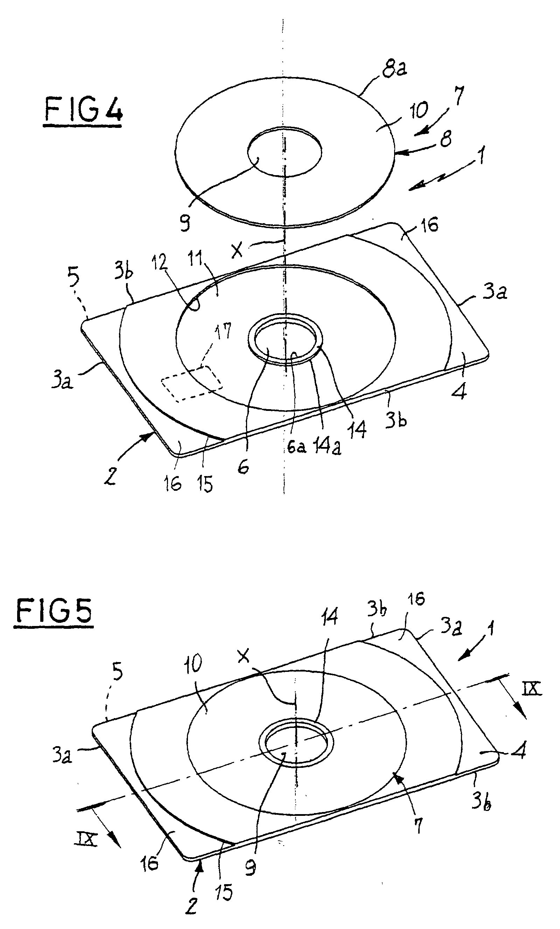

In a different embodiment, shown in Figs. 4, 5, 9 and 10, instead of collar 13 associated with the first memory unit 7, at least one grip lug 14 formed at the inner circumferential edge 6a of said through opening 6 is provided to be arranged. The grip lug 14, preferably having an annular conformation concentric with the through opening 6, defines a coupling ridge 14a facing away from the geometric axis X of the through opening 6, to engage by interference fit the centering hole 9 arranged in the first storage unit 7. In this embodiment, the through opening 6 will have the same inner diameter as the centering hole usually provided in compact discs or DVDs, whereas the centering hole 9 arranged in the first storage unit 7 will have a conveniently bigger diameter.

In this case too, both the grip lug 14 and the centering hole 9 may have a cylindrical configuration, with diameters slightly differentiated from each other to cause mutual coupling by forced fitting (Fig. 9). Alternatively, the grip lug 14 and/or centering hole 9 may be of truncated conical form as shown in Fig. 10, so as to define mutually opposite undercuts facing the second face 5 of the flat support 2 and the reading surface 7b of the first storage unit 7, respectively.

In addition to collar 13 and/or the grip lug 14, the outer circumferential edge 8a of the plate-like body 8 and the circumferential ridge 12 of the surface recess 11 could be such arranged that mutual engagement by mechanical-interference fit will occur. Said outer circumferential edge 8a and circumferential ridge 12 may have a cylindrical configuration, with differentiated diameters to obtain forced coupling of the plate-like body 8 into the surface recess 11. Alternatively, the outer circumferential edge 8a and/or circumferential ridge 12 may have, at least as regards part of their circumferential extension, a frusto-conical conformation, to form mutually opposite undercuts facing the reading surface 7b and the surface recess 11, respectively.

Further associated with card 1 may be means 15, 16 for centering the flat support 2 in a reading and/or data recording device on the first storage unit 7, not shown as known per se and conventional. Advantageously, this centering means 15, 16 may comprise centering shoulders 15 defined by auxiliary surface recesses 16, of a curved profile for example, formed in the first face 4 close to the minor sides 3a of the perimetral edge of the flat support 2.

In addition, associated with the support card 1 may advantageously be at least a further data storage unit 17 accessible from the second face 5 of the flat support 2. This further storage unit 17 can be advantageously made in the form of a microchip incorporated into the flat support 2, within a seat arranged therein, and having contact elements 17a appearing from the second face 5.

The present invention achieves the intended purposes.

Unlike the known art, in which any type of memory must necessarily be accomplished as a single unit with the flat support of the card, the invention enables a memory unit, in particular of the optical type, to be associated with the card, subsequently to production of the card itself. This circumstance opens a great number of new possibilities of use of the cards as digital memory media.

In particular, it is for example possible to arrange a card provided with a fixed digital storage unit, of the microchip type for example, with which an optical memory, optionally interchangeable, may be associated in case of need.

The optical memory made in the form of a DVD disc-half can also advantageously coexist with a microchip memory even if, as it appears from the depicted examples, these memories extend over mutually superposed regions on the flat support. This would be impossible if the optical memory were made in the form of a compact disc, because thickness of said memory, corresponding to the overall thickness of the card, would involve penetration, by the microchip memory, into regions intended for receiving optical data.

On the contrary, due to use of a DVD disc-half, of a thickness of 0.6 mm, a sufficient thickness is left free in the flat support for housing the microchip memory without the latter projecting in the surface recess 11 and thereby occupying regions intended for the optical memory. In this connection it is to be noted that, due to dimensional standardization of the cards of the type in reference, thickness of same must not exceed 1.2 mm, of which thickness the microchip memory only engages about 0.5 mm.

It should be also appreciated that since several memory units can be integrated into one and the same card, there will be an increase in the amount of data storable on the card itself. In addition, with use of a DVD optical memory, storage capacities close to about 1 GB may be easily obtained.

## Claims

1. A data storage unit, comprising:
- a plate-like body (8) having a centering through hole (9);
- at least one region (10) intended for data storage and extending concentric with said centering through hole (9) ; and
- mechanical-interfacing means (9,13) joinable on a support card (1) in such a way to maintain the storage unit (7) integral with the support card when the storage unit is joined on the support card;
**characterized in that** the mechanical-interfacing means comprises at least one tight fitting element (9,13) at the centering through hole (9) to engage and disengage the storage unit with the support card (1).

2. A storage unit as claimed in claim 1, wherein said mechanical-interfacing means comprises a collar (13) axially projecting at said centering through hole (9) and defining a shoulder (13a) facing away from a geometric axis of the through hole (9) and arranged to get engaged by interference fit in a through opening (6) formed in said support card (1).

3. A storage unit as claimed in claim 2, wherein said shoulder (13a) defines an undercut turned towards the plate-like body (8).

4. A storage unit as claimed in claim 1, wherein said mechanical-interfacing means comprises an edge of said centering through hole (9) arranged to engage, by interference fit, a grip lug (14) arranged on said support card (1).

5. A storage unit as claimed in claim 4, wherein the edge of said through hole (9) forms an undercut turned towards a reading face (7b) of said storage unit (7).

6. A storage unit as claimed in claim 1, wherein said plate-like body (8) is essentially defined by a DVD disc-half.

## Patentansprüche

1. Datenspeichervorrichtung, umfassend:
- einen plattenförmigen Körper (8) der eine Zentrierdurchgangsbohrung (9) aufweist;
- mindestens einen für die Datenspeicherung bestimmten Bereich (10), der sich konzentrisch zur Zentrierdurchgangsbohrung (9) erstreckt, und
- mechanische Zusammenschaltungsmittel (9, 13), die an einer Trägerkarte (1) derart vereinbar sind, dass die Datenspeichervorrichtung (7) mit der Trägerkarte festliegt, sobald die Datenspeichervorrichtung an der Trägerkarte vereint ist;
**dadurch gekennzeichnet, dass** die mechanischen Zusammenschaltungsmittel mindestens ein Steckelement (9, 13) im Bereich der Zentrierdurchgangsbohrung (9) aufweisen, um die Datenspeichervorrichtung mit der Trägerkarte (1) in und außer Eingriff zu bringen.

2. Datenspeichervorrichtung nach Anspruch 1, bei der die mechanischen Zusammenschaltungsmittel einen Bund (13) umfassen, der im Bereich der Zentrierdurchgangsbohrung (9) axial vorspringt und eine Schulter (13a) festlegt, die von einer geometrischen Achse der Zentrierdurchgangsbohrung (9) abgewandt und bereitgestellt ist, unter Überschneidung in einer Durchgangsöffnung (6) in Eingriff zu kommen, die in der Trägerkarte (1) ausgenommen ist.

3. Datenspeichervorrichtung nach Anspruch 2, bei der die Schulter (13a) eine Hinterschneidung festlegt, die in Richtung des plattenförmigen Körpers (8) gerichtet ist.

4. Datenspeichervorrichtung nach Anspruch 1, bei der die mechanischen Zusammenschaltungsmittel einen Rand der Zentrierdurchgangsbohrung (9) umfassen, der bereitgestellt ist, unter Überschneidung einen Greifvorsprung (14) zu erfassen, der an der Trägerkarte (1) angeordnet ist.

5. Datenspeichervorrichtung nach Anspruch 4, bei der der Rand der Zentrierdurchgangsbohrung (9) eine Hinterschneidung bildet, die in Richtung einer Ableseseite (7b) der Datenspeichervorrichtung (7) gerichtet ist.

6. Datenspeichervorrichtung nach Anspruch 1, bei der der plattenförmige Körper (8) im wesentlichen durch eine Plattenhälfte DVD festgelegt ist.

## Revendications

1. Dispositif de stockage de données, comprenant:
- un corps en forme de plaque (8) présentant un trou traversant de centrage (9);
- au moins une zone (10) destinée au stockage des données et s'étendant concentrique audit trou traversant de passage (9); et
- des moyens d'interfaçage mécanique (9, 13) destinés à être accouplés sur une carte de support (1) de manière à maintenir l'unité de stockage (7) solidaire de la carte de support quand l'unité de stockage est unie sur la carte de support;
**caractérisé en ce que** les moyens d'interfaçage mécanique comportent au moins un élément d'emboîtement (9, 13) en correspondance avec le trou traversant de centrage (9) pour l'engagement et le dégagement du dispositif de stockage par rapport à la carte de support (1).

2. Dispositif de stockage selon la revendication 1, dans lequel lesdits moyens d'interfaçage mécanique comportent une bague (13) faisant saillie en sens axial en correspondance avec ledit trou traversant de centrage (9) et définissant un épaulement tourné du côté opposé par rapport à un axe géométrique du trou traversant (9) et agencé de manière à être engagé par ajustement avec serrage dans une ouverture traversante (6) formée dans ladite carte de support (1).

3. Dispositif de stockage selon la revendication 2, dans lequel ledit épaulement (13a) définit un creux tourné vers le corps en forme de plaque.

4. Dispositif de stockage selon la revendication 1, dans lequel lesdits moyens d'interfaçage mécanique comportent un bord dudit trou traversant de centrage (9) agencé de manière à engager, par ajustement avec serrage un ressaut de prisé agencé sur ladite carte de support (1).

5. Dispositif de stockage selon la revendication 4, dans lequel le bord dudit trou traversant (9) forme un creux tourné vers une face de lecture (7b) dudit dispositif de stockage (7).

6. Dispositif de stockage selon la revendication 1, dans lequel ledit corps en forme de plaque (8) est essentiellement défini par un demi-disque DVD.
